# EUROPEAN PATENT APPLICATION

(11) **EP 1 097 828 A2**
(43) Date of publication of application: **09.05.2001**
(21) Application number: 00309894.4
(22) Date of filing: 07.11.2000
(51) Int. Cl.: B60H 1/00

(54) **Heater/evaporator unit for a motor vehicle passenger compartment**

(30) Priority: 08.11.1999 GB 9926269
(71) Applicant: Visteon UK Limited, Brentwood, Essex CM13 3BW (GB)
(72) Inventor: Kenning, Daniel William, Chelmsford, Essex CM3 1HH (GB)
(74) Representative: Gemmell, Peter Alan, Dr.

(57) **Abstract**

This invention relates to a housing (12,14), preferably but not exclusively for use with a motor vehicle heater (10) of the type employed to heat the passenger compartment of the motor vehicle. The housing has a unitary housing body (12) formed by blow moulding and a structural frame (14) is formed by injection moulding. The structural frame (14) bears the load of internal components (24,26,17,22) within the housing body (12), enabling the housing body (12) to be made with very thin walls in order to reduce its weight. The housing body (12) has integrally formed internal walls (18,20,21) to guide the flow of air.

## Description

This invention relates to a heater/evaporator unit for use with a motor vehicle passenger compartment. Motor vehicle passenger compartments are normally heated and/or cooled by a heater and/or evaporator unit, referred to herein for convenience simply as a "heater unit". The heater unit normally comprises a housing body through which air is made to circulate. Internal walls and pivoting flaps are normally used to guide the air through the housing body, so that the air passes through an evaporator element and a heater element within the housing body.

Because the housing body supports the evaporator and heater elements, as well as the axles for the pivoting flaps, the wall thickness of the housing must be about 2 mm in order to provide the required strenght. This can make the housing unit heavy, whereas an important consideration in the design of vehicle is to keep the weight of component parts to a minimum.

The housing body is conventionally made from injection moulded plastics material, and is usually made in two halves which then have to be screwed together. The halves will normally have one or more upstanding surfaces which meet to form interior walls when the halves are brought together. Due to tolerance limits, undesirably air leaks can result where the two halves meet, particularly along the line or lines between different sections of interior wall.

It is an object of the present invention to address these issues.

According to the invention, there is provided a heater unit for a motor vehicle comprising a plastics material housing body and a structural frame surrounding and supporting the housing body, characterised in that the housing body is a unitary moulding having at least one air inlet and at least one air outlet with at least one chamber therebetween.

The unitary moulding reduces the likelihood of a leak occurring at the junction where separate parts would otherwise be jointed together to form the housing body.

Preferably, the unitary moulding of the housing body is formed by blow moulding. Since the structural frame will provide support for the housing body, the wall thickness of the unitary can be reduced, for example by making it by blow moulding, thereby making the housing unit lighter.

Preferably, the housing will comprise internal walls that are also part of the unitary moulding, for example being formed by blow moulding. These internal walls will help guide the movement of air as it passes through the housing body.

The internal-facing ends of the internal walls will preferably be radiused in order to reduce the turbulence of the air as is passes through the housing body. Reducing turbulence reduces the pressure difference across the housing body and hence increases the air flow.

As a further preference, the internal walls will be hollow. This will allow width of the internal walls to be increased (and thereby also increase the radius of curvature of their internal facing edges) without substantially increasing the weight of the internal walls.

The internal walls will preferably be curved in one direction, such that the radius of curvature lies in a single plane. The direction of curvature can be chosen to be in the same direction as the air flow through the housing body in order to further reduce turbulence.

The housing body will preferably comprise a plurality of openings. Such openings may be used to provide an inlet and outlet to the housing body, or may be used to insert internal components into the housing body, such as a heater.

The frame will preferably comprise a plurality of receiving features for engaging or otherwise receiving the end portions of internal components located within the housing body and supporting the weight of the components. Such receiving features may take the form of a pair of shaped loops located on opposite sides of the frame. Alternatively, the receiving features may take the form of shaped portions or shaped covers removably attached to the frame.

Some or all of the receiving features may take the form of a plurality of hollow shaft portions for pivotally securing one or more axles to the frame, so that the frame bears the load of the axle and therefore that of any components joined to the axle such as a door. Openings in the housing body will preferably be provided to pass the pivot axle through the external walls, such that the axle makes direct contact with the hollow shaft portion, whose inner surface will act as a bearing for the axle.

However, where other components are received by a receiving feature in the frame, a portion of the external wall of the housing body make take the form of the receiving feature, such that when the internal component is received in the feature, the wall of the housing body is interposed between the receiving feature and the internal component. Such an arrangement will reduce the likelihood of an air leak.

The housing body may be held within the frame by internal components within the housing body that are engaged with, received in or otherwise connected to the frame. However, the housing body will preferably be connected to the frame at one or more securing points. Screws or bolts may be used to secure the housing body to the frame at these points.

The invention will now be further described, by way of example, with reference to the accompanying drawings in which:
Figure 1 shows a perspective view of a heater unit according to a first embodiment of the invention;
Figure 2 shows a schematic side view of a housing body;
Figures 3 to 7 show a sequence of steps in the blow-moulding of a hollow article;
Figure 8 shows a schematic cross sectional view though a heater unit according to a second embodiment of the invention; and
Figure 9 shows an exploded view of the region within the dotted circle in Figure 8.

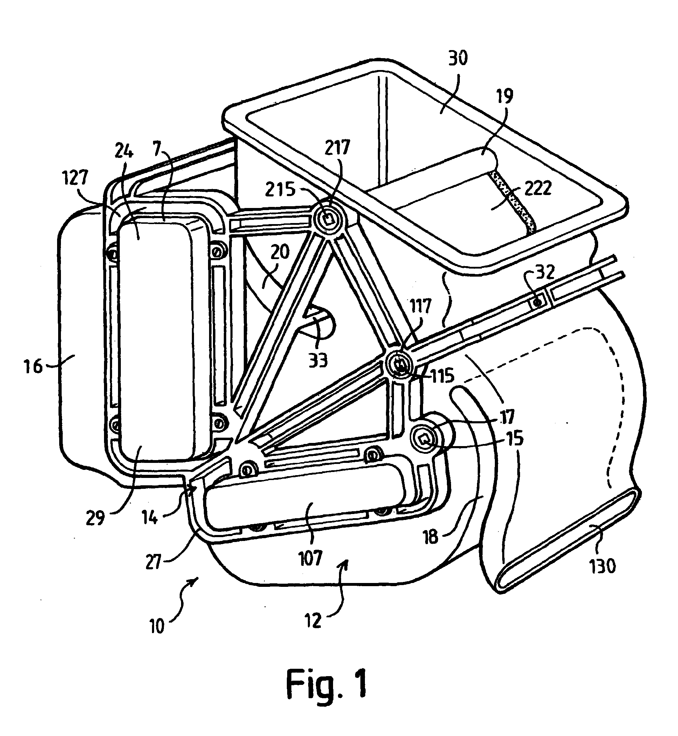

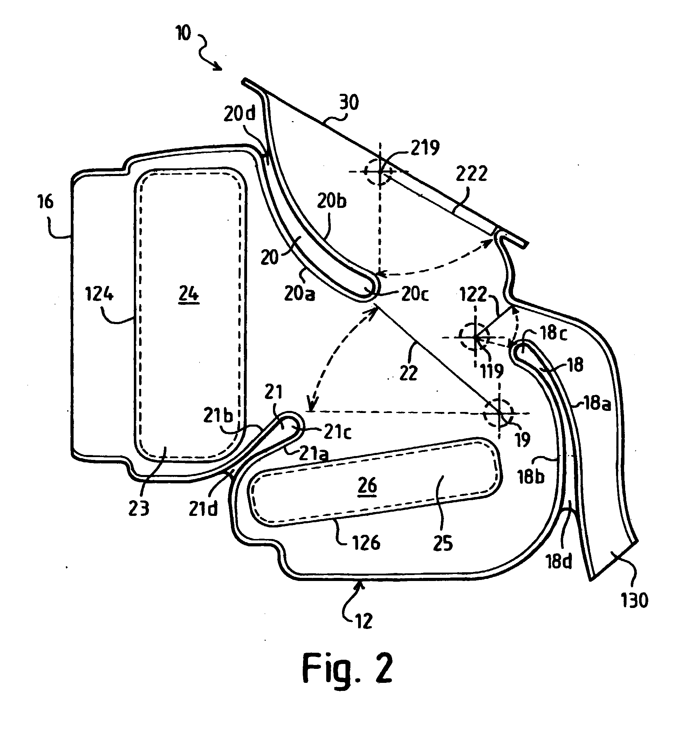

Figures 1 and 2 show a heater unit 10 with a plastics material blow moulded housing body 12 surrounded by a plastic material injection moulded structural frame 14. Fresh air enters the heater unit 10 through an inlet opening 16, and is guided (in part) by internal walls 18,20,21 formed integrally with the housing body 12 to one or both of two outlets 30,130. The air entering the heater unit 10 is first dried by passing through an evaporator 24 shown in dashed outline, and is subsequently directed by a pivoting main door 22 either to a heater 26 shown in dashed outline, or directly to one of the outlet openings 30,130, depending on the position of the main door 22. Other outlet section doors 122,222 are used to select one or both of the two outlets 30,130.

The shape of the air chamber within the heater unit 10 is defined by the internal walls of the heater unit 12, the locations of the inlet and outlets openings 16,30,130 and the positions of the pivoting doors 22,122,222.

As will be shown below, the frame 14 is adapted to bear the weight of the main internal components within the heater unit 10, such as the doors 22,122,222 the heater 26 and the evaporator 24. The external walls of the housing body 12 are about 0.6 mm in thickness, and are consequently relatively weak.

The frame comprises two pairs of loops 27,127 one loop from each pair on each opposite side of the frame 14, such that the evaporator 24 and the heater 26 are each supported by the frame when these are placed within the housing body between the loops 27,127. The housing body has on one or both sides two apertures 124,126 to allow for respectively the evaporator 24 and the heater 26 to be inserted into the housing body. These apertures 124,126 are then covered by sealing plates 7,107 affixed to the frame 14. The ends of the evaporator 24 and heater 26 passing through the loops 27,127 are retained by cupped projections formed by the sealing plates 7,107 and by similar projections integral with the housing body 12 on the far side of the housing as viewed in Figure 1.

Each door 22,122,222 has a pivot axle 19,119,219 that runs through openings in the housing body 12 and is received at each end within a hollow cylindrical bearing 17,117,217 within the frame 14, such that each pivot axle 19,119,219 is able to rotate between the bearings 17,117,217 in order allow the door to pivot. In this way, the weight of each door 22,122,222 is born by the frame 14 rather than the housing 12, which as mentioned above, is relatively weak.

Each axle 19,119,219 is prevented from moving laterally with respect to the frame 14 by a bolt 15,115,215 at one end and at the other end by a lever 13 (only one of which is shown) that has a hollow shaft 113 attached to the axle 19. The bolts 15,115,215 and the levers 13 are situated on the outside of the frame 14. Since the axles 19,119,219 run through openings in the housing, this method of securing the axles to the frame also serves to secure the housing body 12 to the frame 14.

The internal walls 18,20,21 each have two surfaces, denoted with the suffix a or b respectively. The surfaces do not touch each other and in this example the walls are hollow, the gap within each wall being denoted by the suffix c.

The frame 14 and the housing body 12 are formed separately, the frame being formed by injection moulding, in two parts which are subsequently assembled around the housing 12 and held together at a plurality of fixing points 32.

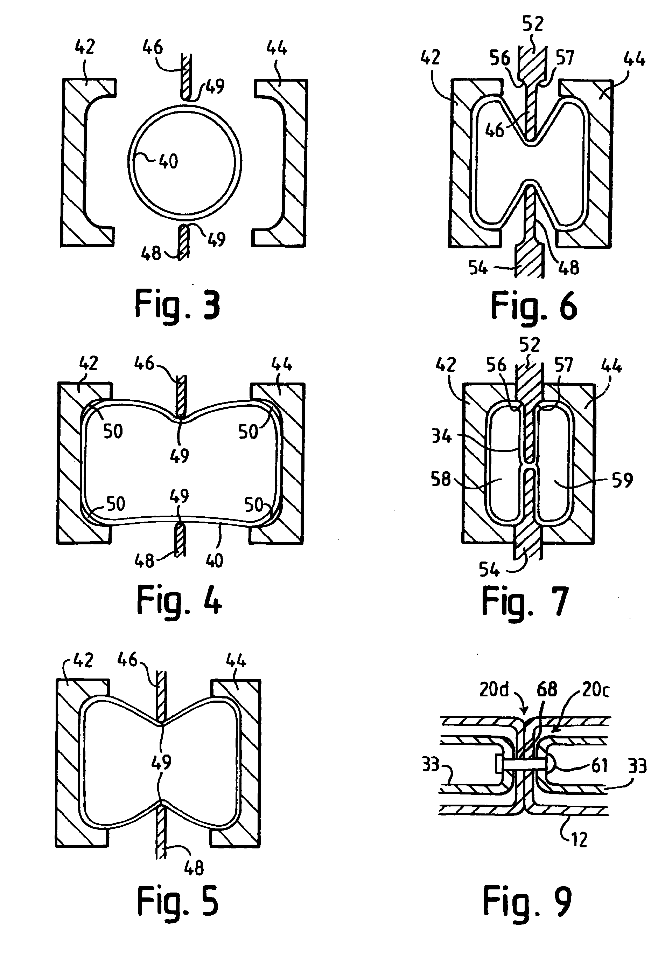

The housing is formed by a blow moulding process that is adapted for the formation of internal walls. An example of this process will now be described with reference to Figures 3 to 7, where the formation of an article shaped in only two directions is shown.

Figure 3 shows a parison 40 which has been pre-blown to a generally cylindrical form and which is arranged between two mould parts 42 and 44 which are in an open, spaced apart, position. At either side of the mould there are retractable cores 46 and 48 in the form of flat plates with rounded leading edges 49.

In the second step shown in Figure 4, the parison 40 is fully blown into contact with the internal surfaces of the mould parts 42 and 44. The spacing between the mould parts at this time and the thickness of the parison walls will be chosen so that this position can be reached without the unsupported parts of the parison walls over inflating. It will be seen that in this position the parison walls make light, but not complete, contact with the mould parts and that there are void areas (indicated at 50) where the parison has not yet fully taken up the form of the mould parts.

Between the mould parts 42,44 the parison walls are also supported by contact against the leading edges 49 of the retractable cores 46, 48.

In the next stage shown in Figure 5 the mould parts 42,44 have begun to close and the retractable cores 46, 48 have begun to approach one another. These movements are synchronised with one another, and as this movement takes place internal pressure within the parison is maintained. As the internal volume within the parison is decreasing, the pressure exerted on the parison walls will increase and the parison walls will now take up the form of the internal surfaces of the mould parts 42, 44.

Figure 6 shows the stage in which the moulding is nearly completed. The mould parts 42, 44 have approached one another still further and the retractable cores 46, 48 have also approached one another still further. It will be seen that the cores 46, 48 are in the form of plates that flare out with radiused shoulders 56,57 towards bases 52, 54. When the mould is fully shut, as can be seen in Figure 7, the mould parts 42, 44 seat against the bases 52, 54 and the radiused shoulders 56,57 between the plates and the bases 52,54 form the junction between the cores 46,48 and the internal mould surfaces.

Figure 7 shows the last stage in moulding where the product has two chambers 58, 59 which are separated by what has become a single internal moulded wall 34.

In Figures 3 to 7, the internal form of the mould parts is a very simple shape. To form the housing 12 of the heater unit in Figures 1 and 2, three or more mould parts will be used and the mould parts will have a more complicated internal shape necessary to form the shape of the housing 12. During the moulding process, the cores 46,48 will be inserted and retracted in a direction that is normal to the page in Figure 2. Because the internal walls 18,20,21 are curved, the cores will also be curved, the curvature being in a direction normal to the direction in which the cores move during the moulding process.

Each internal wall 18,20,21 is formed by two cores that move towards one another from opposite sides of the housing 12 as it is being formed. The rounded leading edges of the cores will not be straight, and when the cores meet, a narrow gap will remain between the leading edges over most of their length. This results in a web 18d,20d,21d of plastics material remaining between the leading edges of the cores during the formation of each respective internal wall 18,20,21. The webs extend perpendicularly between the two sides 18a,18b; 20a,20b; 21a,21b of each respective internal wall. Close to the outside ends of the internal walls, the leading edges of the cores come into direct contact when they meet, thereby clipping off the ends of the webs 18d,20d,21d.

The webs 18d,20d,21d provide some structural linkage between portions of the housing separated by an internal wall. A hole can be provided in one or more of the webs in order to provide one or more securing points for one or more arms 33 of the frame 14 extending into the hollow area of the internal walls.

During fabrication, the housing body 12 will be moulded with a closed exterior surface having protrusions known as lost heads extending across areas for evaporator and heater openings 124,126, the inlet opening 16, the outlet openings 30,130 are to be made in the housing 12 body. The openings will then be formed by cutting away these protrusions, either when the housing 12 is within the moulds 42,44 or after the housing 12 has been removed from the moulds. Thus, a unitary housing body 12 for a motor vehicle heater can be formed.

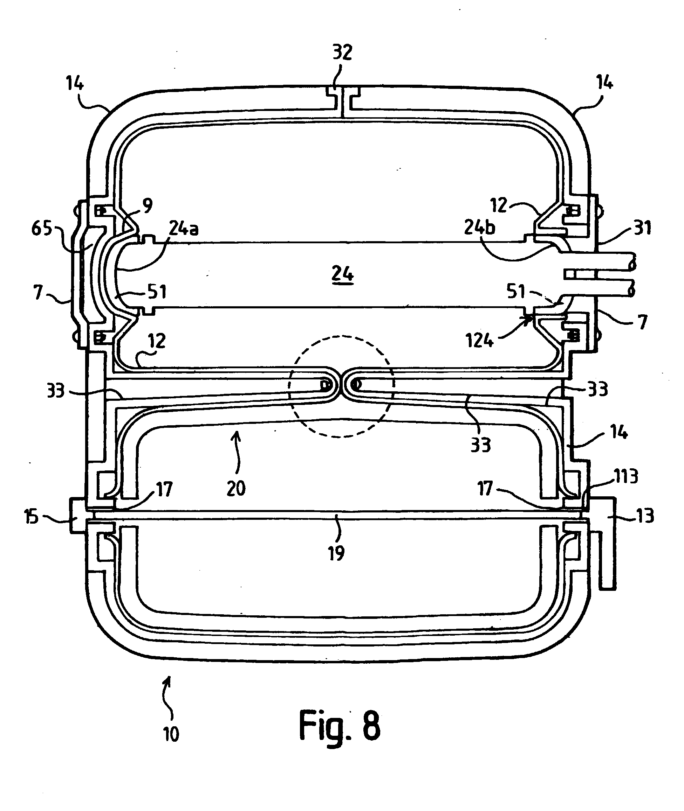

In Figure 8, a heater unit 10 is shown schematically in cross section. An expanded view of the region within the dotted circle is shown in Figure 9. The cross section of the heater unit in Figure 8 displays different aspects of the heater unit of Figures 1 and 2 in a single cross section, and does not represent a planar cross section through Figures 1 and 2.

As can be seen from Figure 8, the frame 14 had a shaped feature 65 to receive one end 24a of an elongate evaporator 24, and the other end of the evaporator 24b is held in place by a cover 7, shaped so that its internal face accepts the end 24b of the evaporator. A sheet of foam 51 is located between the ends 24a,b of the evaporator and the frame/cover in order to prevent significant vibration of the evaporator 24 when it is in place in the heater unit 10. An opening 124 is provided in the housing body 12 to insert the evaporator during fabrication.

Only one opening 124 in the housing body 12 is provided to insert the evaporator 24. On the opposite side of the housing body 12, the housing body 12 has a shaped portion 9 which conforms to the shape of one end 24a of the evaporator 24. The shaped portion 9 of the housing body 12 is received in the receiving feature 65 of the frame 14, so that when the end 24a of the evaporator 24 is received by the receiving feature 65, the shaped portion 9 of the housing wall is interposed between receiving feature 65 and the evaporator end 24a. This removes the need for an additional opening in the wall of the housing body 12.

As described above, an internal wall 20 is shown, with surfaces 20a and 20b, separated by a gap 20c. A web 20d extends between the two wall surfaces 20a and 20b. As can be seen more clearly in Figure 9, arms 33 of the frame 14 extend into the gap 20c from both sides of the web 20d, and the ends of the arms 33 are secured together though a hole 68 in the web 20d, by a bolt 61 such that the hole 68 in the web 20d provides a securing point where the housing body 12 is secured to the frame 14.

In the lower part of Figure 8, the door axle 19 is shown extending into a bearings 17 formed integrally with the casing. The axis is secured at each end by a bolt 15 and a lever 17 respectively.

As can be appreciated from the above description, the invention provides a heater unit with a strong but light weight housing.

## Claims

1. A heater unit (10) for a motor vehicle comprising a plastics material housing body (12) and a structural frame (14) surrounding and supporting the housing body (12), characterised in that the housing body (12) is a unitary moulding having at least one air inlet (16) and at least one air outlet (30,130) with at least one chamber therebetween.

2. A heater unit (10) as claimed in Claim 1, wherein the housing body (12) has unitary internal walls (18,20,21).

3. A heater unit (10) as claimed in Claim 2, wherein the internal-facing ends of the internal walls (18,20,21) are radiused.

4. A heater unit (10) as claimed in any one of Claims 2 to 3, wherein the internal walls (18,20,21) are hollow.

5. A heater unit (10) as claimed in any one of Claims 2 to 4, wherein the internal walls (18,20,21) are curved in one direction.

6. A heater unit (10) as claimed in any of the preceding claims, wherein the heater unit (10) further comprises a heater (26) and/or evaporator (24) inside an air chamber.

7. A heater unit (10) as claimed in Claim 6, wherein the frame (14) comprises a plurality of receiving features (65,31) each of which is adapted to receiving an end portion (24a,24b,26a,26b) of a heater (26) or an evaporator (24).

8. A heater unit (10) as claimed in Claim 7, wherein the housing body (12) has a shaped external wall portion (9) arranged such that when a heater or evaporator is received in the receiving feature (65), the shaped internal wall portion (9) is interposed between the receiving feature (65) and said heater (26) or evaporator (24).

9. A heater unit (10) as claimed in any preceding claim, wherein the frame (14) comprises bearings (17,17,217) for pivotable flaps inside an air chamber.

10. A heater unit (10) as claimed in any preceding claim, wherein the housing body (12) is connected to the frame (14) at one or more securing points.

11. A heater unit (10) as claimed in any preceding claim, in which the housing body (12) is formed by blow moulding and the frame (14) is formed by injection moulding.
